Europäisches Patentamt
European Patent Office
Office européen des brevets

(19) (11) Publication number: **0 156 630 A2**

# EUROPEAN PATENT APPLICATION

(21) Application number: 85302004.8

(22) Date of filing: 22.03.85

(51) Int. Cl.[4]: **C 07 B 59/00**
C 07 C 69/74, A 01 N 55/00
//C07C43/295, C07C47/575

(30) Priority: 23.03.84 AU 4222/84

(43) Date of publication of application: 02.10.85 Bulletin 85/40

(84) Designated Contracting States: BE CH DE FR GB IT LI NL SE

(71) Applicant: COMMONWEALTH SCIENTIFIC AND INDUSTRIAL RESEARCH ORGANIZATION
Limestone Avenue
Campbell Australian Capital Territory 2601(AU)

(72) Inventor: Holan, George
86 Were Street
Brighton Victoria(AU)

(72) Inventor: Walser, Reimund August
11 Mitchell Road Box Hill
Victoria(AU)

(72) Inventor: O'Keefe, David Francis
13 Oakern Street
Mt. Waverley Victoria(AU)

(74) Representative: Lawrence, Peter Robin Broughton et al,
GILL JENNINGS & EVERY 53-64 Chancery Lane
London WC2A 1HN(GB)

(54) **Arthropodicidal compounds, their manufacture and uses in compositions containing them.**

(57) The activity of an arthropodicidal compound is increased by substituting at least one deuterium atom for a hydrogen atom attached to a carbon in the structure of the compound. Preferred compounds with arthropodicidal activity have the general formula (I)

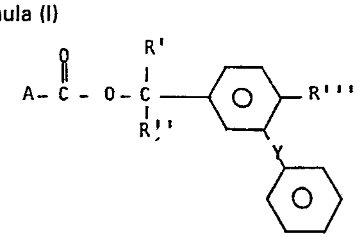

wherein

A represents any group which in association with the remainder of the molecule gives arthropodicidal activity and which may contain a deuterium atom in place of any hydrogen atom which is attached to a carbon atom having four separate bonds;

Y is O, S, $CH_2$, or NH;

R' is hydrogen or deuterium,

R'' is hydrogen, deuterium, $-CH$, $-C\equiv CH$ or $-C\equiv CD$ and

R''' is hydrogen or fluorine; provided that the compound contains at least one deuterium atom. Compositions containing them and methods of using and making these compounds, and a deuterated alcohol starting material, are described.

EP 0 156 630 A2

0156630

COMMONWEALTH SCIENTICIF AND INDUSTRIAL RESEARCH ORGANIZATION

60/2437/02

# ARTHROPODICIDAL COMPOUNDS, THEIR MANUFACTURE AND USES IN COMPOSITIONS CONTAINING THEM

This invention relates to new compounds having arthropodicidal activity, to methods of preparing these compounds and to the use of the compounds as arthropodicides, especially as insecticides and acaricides.

Various arthropodicidal compounds are known and a particularly valuable class of them are the pyrethroid-type insecticides, which may be naturally occurring or, more usually, synthetic. Disclosures of various pyrethroid type insecticides exist in, for instance, Australian Patents 503590, 530169 and 525002.

Much research has been devoted to producing arthropodicidal compounds of increased activity, for instance by selection of appropriate isomers and by appropriate substitution in various positions in the molecules.

We have now surprisingly found that it is possible to increase the activity of an arthropodicidal compound by substituting at least 1 deuterium atom for a hydrogen atom attached to a carbon atom in the structure of the compound. Thus novel compounds of the invention are arthropodicidal compounds wherein there is at least one deuterium atom substituted onto a carbon atom.

The preferred compounds of the invention have the general formula (I):

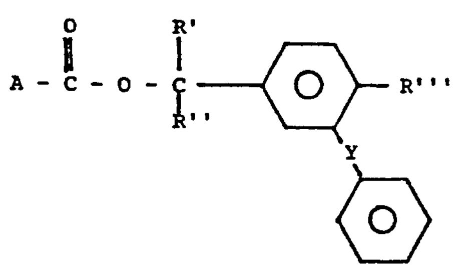

(I)

wherein A represents any group which in association with the remainder of the molecule gives arthropodicidal activity and which may contain a deuterium atom in place of any hydrogen atom which is attached to a carbon atom having four separate bonds;
Y is O, S, $CH_2$, or NH;
R' is hydrogen or deuterium, R'' is hydrogen, deuterium, -CH, -C≡CH or -C≡CD and R''' is hydrogen or fluorine; provided that the compound contains at least one deuterium atom.

Typically, ACOO- represents the acid moiety of a known pyrethroid-type insecticide.

Well known structures for A that give arthropodicidal compounds of Formula I are as follows:

(a)

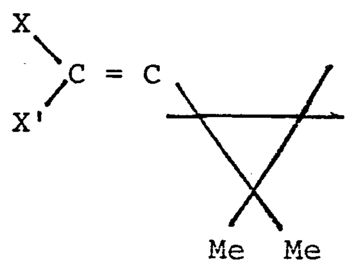

(b)

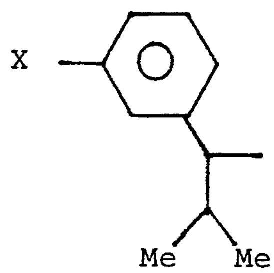

(c)

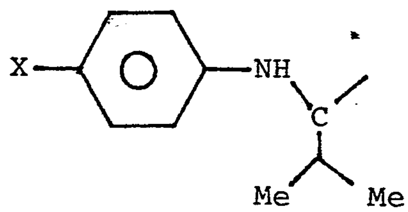

(d)

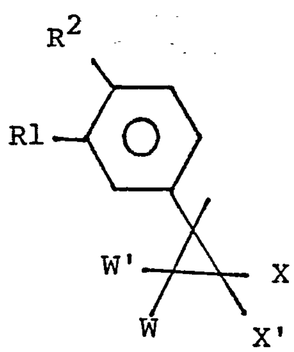

(e)

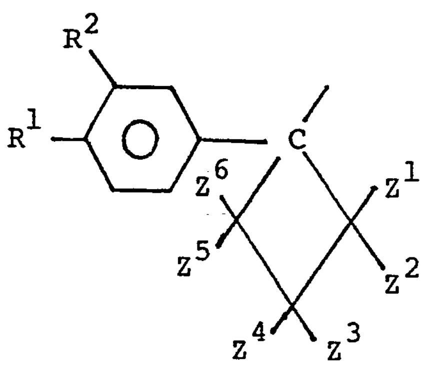

wherein

$R^1$ is a halo group; or a lower alkyl, lower alkoxy or lower alkylthio group, in each of which the alkyl group may be substituted with one or more halo groups;

$R^2$ is hydrogen or a halo or malomethyl group; or $R^1$ and $R^2$ together form a methylenedioxy, or a difluoro-methylenedioxy group or, $R^1$ and $R^2$ together with the carbon atoms to which they are attached, form an aromatic ring;

wherein any hydrogen atom in $R^1$ or $R^2$ may be replaced by deuterium;

X and X' are the same or different and are selected from chloro, fluoro, bromo, methyl or trifluoromethyl;

W and W' are the same or different and each is hydrogen or deuterium;

$Z^1$, $Z^2$, $Z^3$, $Z^4$, $Z^5$ and $Z^6$ are the same or different and are selected from fluoro, chloro, bromo, hydrogen, deuterium, $-CH_3$, $-CH_2X$, $-CHX_2$ and $-CX_3$ wherein X is as defined above.

The insecticidal activity of pyrethroid esters is limited by degradation of the compounds within the insect. This is manifested as recovery of the insect after initial knockdown or by larger than expected lethal doses. Although the addition of mixed function oxidase inhibitors as synergists gives significant but unpredictable increases in activity of pyrethroids, degradation still limits their activity.

In an attempt to decrease biodegradation of pyrethroids, protons on various positions of pyrethroid

esters (particularly those of our Australian Patents 502,950, 530,169 and 525,002) were replaced by deuterium. We discovered that deuteration significantly increased activity. We also discovered that a wide range of acids when esterified by the alcohols of Formula II give esters with significantly increased activity compared to the corresponding non-deuterated esters. This effect holds also for optical isomers of these esters.

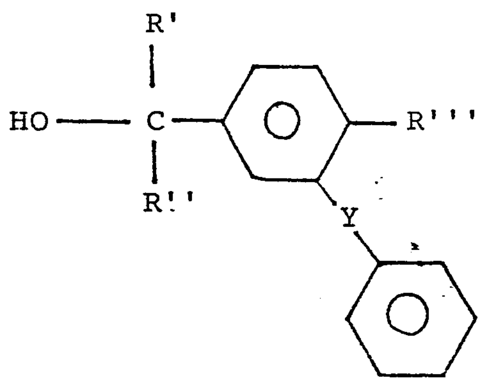

II

The compounds of formula II, including its isomeric and racemic forms, (where Y, R', R'' and R''' are as defined above) are novel and constitute a separate aspect of this invention.

The compounds of the invention (formula (I)) are optically active and can be resolved into their optical isomers by conventional methods. The invention thus includes the individual optical isomers of the compounds as well as the racemic forms.

The compounds of formula (I) may be prepared by the conventional methods of synthetic organic chemistry. In

general, the compounds are formed by reacting together the alcohol of formula (II) or a reactive derivative thereof with the appropriate acid ACOOH (where A is as defined above) or a reactive derivative thereof.

The active compounds of the invention are well tolerated by plants, have a favourable level of toxicity to warm-blooded animals, and can be used for combating arthropod pests, especially insects or acarids, which are encountered in agriculture, in veterinary practice, in forestry, in the protection of stored products and of materials, and in the hygiene field. They are active against normally sensitive and resistant species and against all or some stages of development. The abovementioned pests include Lucilia cuprina (the Australian sheep blowfly), Blatella germanica (German cockroach), Periplaneta americana (American cockroach) and Heliothis punctigera (cotton budworm).

The present invention also provides arthropodicial compositions containing as active ingredients a compound of the present invention.

The present invention also provides a method of combating arthropods (especially insects or acarids) which comprises applying to the arthropods, or to a habitat thereof, a compound of the present invention alone or in the form of a composition containing as active ingredient a compound of the present invention.

The present invention also provides a method of freeing or protecting domesticated animals from parasitical insects or acarids which comprises applying

to said animals a compound according to the present invention, or a composition containing such a compound as the active ingredient.

In the compositions of this invention, the active compounds are converted into such customary formulations as solutions, emulsions, wettable powders, suspensions, powders, dusting agents, foams, pastes, soluble powders, granules, aerosols, suspension-emulsion concentrates, seed-treatment powders, natural and synthetic materials impregnated with active compound, very fine capsules in polymeric substances, and coating compositions for use on seed, as well as ULV cold mist and warm mist formulations.

These formulations may be produced in known manner, for example by mixing the active compounds with extenders, i.e., liquid or liquefied gaseous or solid diluents or carriers, optionally with the use of surface-active agents, i.e., emulsifying agents and/or dispersing agents and/or foam-forming agents. Where water is used as an extender, auxiliary solvents, such as for example, organic solvents, can also be used.

Examples of suitable liquid diluents or carriers, especially solvents, are aromatic hydrocarbons, such as xylene, toluene or alkyl naphthalenes, chlorinated aromatic or chlorinated aliphatic hydrocarbons, such as chlorobenzenes, chloroethylenes or methylene chloride; aliphatic or alicyclic hydrocarbons, such as cyclohexane or paraffins, for example mineral oil fractions; alcohols, such as butanol or glycol, as well as their ethers; and esters, ketones, such as acetone, methyl

ethyl ketone, methyl isobutyl ketone or cyclohexanone; and strongly polar solvents, such as dimethylformamide and dimethyl sulphoxide, as well as water.

By liquefied gaseous diluents or carriers are meant liquids which would be gaseous at normal temperature and under normal pressure, for example aerosol propellants, such as halogenated hydrocarbons as well as butane, propane, nitrogen and carbon dioxide.

Examples of solid carriers are ground natural minerals, such as kaolins, clays, talc, chalk, quartz, attapulgite, montmorillonite or diatomaceous earth; and ground synthetic minerals, such as highly-dispersed silicic acid, alumina and silicates. As solid carriers for granules there may be used crushed and fractionated natural rocks such as calcite, marble, pumice, sepiolite and dolomite; as well as synthetic granules of inorganic and organic meals, and granules of organic material such as sawdust, coconut shells, maize cobs and tobacco stalks.

Examples of emulsifying and/or foam-forming agents are non-ionic and anionic emulsifiers, such as polyoxyethylene-fatty acid esters, polyoxy ethylene-fatty alcohol ethers, for example alkylaryl polyglycol ethers, alkyl sulphonates, alkyl sulphates, aryl sulphonates, as well as albumin hydrolysis products. Dispersing agents include, for example, lignin sulphite waste liquors and methylcellulose.

Adhesives such as carboxymethylcellulose and natural and synthetic polymers in the form of powders,

granules or latices, such as gum arabic, polyvinyl alcohol and polyvinyl acetate, can be used in the formulations.

It is also possible to use colorants such as inorganic pigments, for example iron oxide, titanium oxide and Prussian Blue, and organic dyestuffs, such as alizarin dyestuffs, azo dyestuffs or metal phthalocyanine dyestuffs.

The formulations in general will contain from 0.1 to 95 per cent by weight of active compound, preferably from 0.5 to 90 per cent by weight.

The active compounds according to the invention may be used in the form of formulations of the types that are commercially available or in the use forms prepared from these formulations.

The active compound content of the use forms prepared from the formulations of the types that are commercially available can vary within wide ranges. The active compound concentration of the use forms can be from 0.0000001 to 100% by weight of active compound, preferably from 0.0001 to 10% by weight.

The compounds may be employed in a customary manner appropriate for the particular use forms.

The active compounds according to the invention are also suitable for combating ectoparasites and endoparasites in the field of veterinary medicine. The compounds may be used in a known manner, such as orally

in the form of, for example, tablets, capsules, drenches and granules; dermally by means of, for example, dipping, spraying, pouring-on, spotting-on and powdering.

The compounds may be employed either as the sole toxic agent in compositions such as those described above, or in combination with other anthropodicides, especially insecticides, such as pyrethrum, rotenone, or with fungicidal or bactericidal agents, to provide compositions useful for household and agricultural dusts and sprays, textile coating and impregnation, and the like.

In particular, the compounds of the invention may be advantageously combined with other substances which have a synergistic or potentiating action. Generally such substances are of the class of microsomal oxidase inhibitors, i.e., they inhibit the detoxification of insecticides in insects produced by the action of oxidative enzymes. Typical substances of this type are the pyrethrin synergists of which the following are examples:-

[2-(2-butoxyethoxy)ethoxy]-4,5-methylenedioxy-2-propyltoluene (Piperonyl butoxide), 3-hexyl-5(3,4-methylenedioxyphenyl)-2-cyclohexanone (Piperonyl cyclonene), 2-(3,4-methylenedioxy-phenoxy)-3,6,9-trioxaundecane (Sesoxane or Sesamex), 1,2-(methylenedioxy)-4-[2-(octylsulfinyl)propyl]benzene (Sulfoxide), dipropyl-5,6,7,8-tetrahydro-7-methylnaphtho-[2,3-d], 3-dioxole-5,6-dicarboxylate (n-Propyl isome), as well as propynyl ethers and propynyl oximes.

("Sesoxane", "Sesamex" and "Sulphoxide" are Registered Trade Marks).

Piperonyl butoxide is particularly useful as a potentiator. The amount of piperonyl butoxide used may vary from 1/100th to fifty times the weight of the compound I the preferred range being from about 1/100th to five parts by weight. 'Sesamex' also is a useful potentiator in similar amounts.

The following general methods were used to prepare the compounds described in the Examples which follow.

A. <u>Formation of Deuterated Compound by Esterification</u>

The appropriate acid (2 mmol) is refluxed with thionyl chloride (4 mmol, 0.5g), on a steam bath for 1 hour and then evaporated to dryness to remove excess thionyl chloride and leave the acid chloride as an oil. This oil was dissolved in sodium dried benzene (5 ml) and pyridine (2 mmol, 0.24g) added, followed in 5 minutes by the appropriate deuterated alcohol (2 mmol). The mixture was allowed to react at room temperature overnight, after which it is diluted with diethyl ether (20 ml), filtered and evaporated to dryness. The crude ester, usually a yellow viscous oil, was purified by high performance liquid chromatography (HPLC) using petroleum spirit (60° - 80°C)/ethylacetate as the eluting solvents.

B. Preparation of substituted Dideuteromethanol compounds

The appropriately substituted aromatic carboxylic acid (0.1 mmol) is reacted with thionyl chloride (0.2 mmol) on a steam bath for 2 hours and the solution evaporated to dryness. The residue is dissolved in dry diethyl ether and added over 1 hour to a slurry of lithium aluminium deuteride (1g) in 100ml of dry ether. The reaction mixture is cooled in an ice bath to keep the temperature below 10°C. At the completion of the addition the reaction mixture is warmed to a gentle reflux for 4 hours, then allowed to stand overnight at room temperature. Water is added dropwise to decompose excess $LiAlD_4$ then the mixture is acidified with dilute hydrochloric acid. The aqueous and ether layers are separated, the aqueous layer washed with ether and the ether solutions combined. The ether extract is washed with water, dilute sodium bicarbonate solution and dried over $Na_2SO_4$. The ether is evaporated from the dried extract to give an oil which is the desired product.

$$R - COOH + SOCl_2 \longrightarrow R - COCl$$
$$R - COCl + LiAlD_4 \longrightarrow R - CD_2OH$$

See Example 1(a) for a specific example of this reaction.

C. Preparation of Substituted 1-d-prop-2-yn-1-d compounds

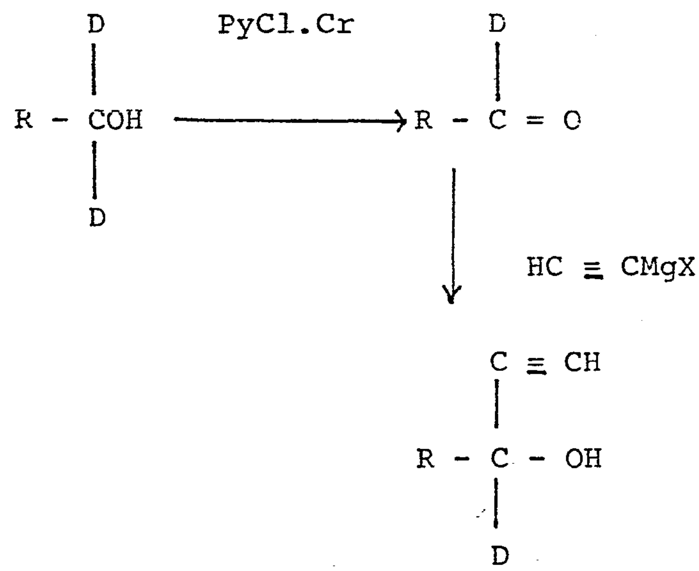


Concentrated hydrochloric acid (3 ml) and water (2 ml) is placed in a stirred flask and chromium trioxide (2.5g) added. The $CrO_3$ solution is cooled in an ice bath and pyridine added dropwise over 15 minutes. The orange coloured precipitate which forms is filtered and dried under vacuum to give a light brown solid. This pyridinium chlorochromate is slurried in 20 ml. of methylene chloride and the appropriate substituted dideuteromethanol (2.56g) is added at room temperature. After 3 hours the solution is decanted off and the residue washed with further portions of methylene chloride. The methylene chloride solutions are combined and chromatographed on a short silica column to give an oil. This is distilled at $10^{-6}$ Torr, to yield the deuteroaldehyde as a colourless oil.

Ethyl bromide (2.61g) and magnesium powder (0.58g) are reacted together in 10 ml of dry tetrahydrofuran to form a Grignard reagent solution.

In a separate flask acetylene is bubbled through 10 ml of tetrahydrofuran cooled in ice. The Grignard reagent solution is added to this over 30 minutes and acetylene addition maintained for a further 2 hours. The deuteroaldehyde prepared above is dissolved in THF (5 ml) and added to the ice cold solution over 15 minutes. The reaction was allowed to proceed overnight. A solution of ammonium chloride (1.28g) in 5 ml $H_2O$ is added dropwise to the reaction vessel to decompose excess Grignard reagent. Water is then added and the reaction mixture transferred to a separating funnel. The aqueous layer is extracted with ether. The organic extracts are combined, washed with water and dried over $Na_2SO_4$. After removal of solvents form the dried extracts a yellow viscous oil remains. Separation of this by HPLC gives a pale yellow oil, whose structure can be determined by proton nmr.

See examples 1(b) and 1(c) for a specific example of this preparation.

D. <u>Preparation of substituted 1-(ol-d)-prop-2-yne-d</u>

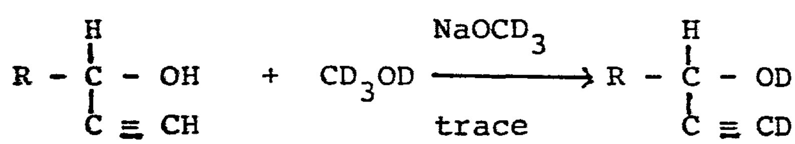

The appropriately substituted prop-2-ny-1-ol (300 mg) is diluted with (methyl-$d_3$) alcohol-d and two drops of sodium methoxide-$d_3$ added as a catalyst. The disappearance of the acetylenic protons is monitored by proton nmr spectroscopy. When the exchange is complete the solution is evaporated to dryness to recover the dideuterated alcohol.

The preparation and properties of the compounds of the invention are illustrated by the following specific examples. It should be noted, of course, that these examples are intended to be illustrative of the methods and procedures utilized in preparing the compounds and that they are not intended to be restrictive or to be regarded as embodying the only way in which the compounds can be formed and recovered.

EXAMPLE 1

Preparation of 3'-phenoxyphenyl-2-d-prop-2-yn-1-ol.

(a) 3'-phenoxyphenyl-methyl-$d_2$ alcohol.

3-phenoxy benzoic acid (8.6g) was reacted with thionyl chloride (9.52g) on a steam bath for 2 hours, then the solution evaporated to dryness. The residue was dissolved in dry diethyl ether and added over 1 hour to a slurry of lithium aluminium deuteride (1g) in 100 ml of dry ether. The reaction mixture was cooled in an ice bath to keep the temperature below 10°C. At the completion of the addition the reaction mixture was warmed to a gentle reflux for 4 hours, then allowed to stand overnight at room temperature. The addition of a further small portion (0.1g) of $LiAlD_4$ was needed to

complete the reaction. Water was added dropwise to decompose excess $LiALD_4$ then the mixture was acidified with dilute hydrochloric acid. The aqueous and ether layers were separated, the aqueous layer washed with ether and the ether solutions combined. The ether extract was washed with water, dilute sodium bicarbonate solution and dried over $Na_2SO_4$. The ether was evaporated from the dried extract to give 8.06g of a yellow oil. This oil was purified by chromatography over silica using $CH_2Cl_2$/methanol as eluent to give a faintly yellow oil (4.42g) with infrared and nmr spectra corresponding to the structure expected. The parent ion (MW +1) by mass spectroscopy was at m/e 203.

Analysis: Found: C 76.6%, H 5.86%
Calculated for $C_{13}H_{10}D_2O_2$ : C 78.0%, H 6.04%

(b) Preparation of 3'-phenoxyphenyl-d-formaldehyde.

Concentrated hydrochloric acid (3 ml) and water (2 ml) was placed in a stirred flask and chromium trioxide (2.5g) added. The $CrO_3$ solution was cooled in an ice bath and pyridine added dropwise over 15 minutes. The orange coloured precipitate which formed was filtered and dried under vacuum to give 4.1g of a light brown solid. This pyridinum chlorochromate was slurried in 20 ml of methylene chloride and 3'-phenoxyphenyl-dideuteromethanol (2.56g) was added at room temperature. After 3 hours the solution was decanted off and the residue washed with further portions of methylene chloride. The methylene chloride solutions were combined and chromographed on a short silica column to give 2.48g of a pale yellow oil. This was distilled at

$10^{-6}$ Torr, bp 80°C, to yield 2.35g of a colourless oil. The infrared and nmr spectra of this oil corresponded with the expected structure. The parent ion (MW +1) by mass specctroscopy was at m/e 200.

Analysis: Found: C 78.25%, (H & D) 5.06%.
Calculated for $C_{13}H_9DO_2$ : C 78 37%, (H & D) 5.06%.

(c) 3'-phenoxyphenyl-2-d-prop-2-yn-1-ol.

Ethyl bromide (2.61g) and magnesium powder (0.58g) were reacted together in 10 ml of dry tetrahydrofuran to form a Grignard reagent solution.

In a separate flask acetylene was bubbled through 10 ml of tetrahydrofuran cooled in ice. The Grignard reagent solution was added to this over 30 minutes and acetylene addition maintained for a further 2 hours. The deuteroaldehyde prepared above was dissolved in THF (5 ml) and added to the ice cold solution over 15 minutes. The reaction was allowed to proceed overnight. A solution of ammonium chloride (1.28g) in 5 ml $H_2O$ was added dropwise to the reaction vessel to decompose excess Grignard reagent. Water was then added and the reaction mixture transferred to a separating funnel. The aqueous layer was extracted with ether. The organic extracts were combined, washed with water and dried over $Na_2SO_4$. After removal of solvents from the dried extracts a yellow viscous oil (2.31g) remained. Separation of this by HPLC gave 1.19g of pale yellow oil, which had the same proton nmr spectrum as 3'-phenoxybenzyl-prop-2-yn-1-ol except for the absence of the doublet peak at 6.40 ppm for the proton attached

to the 1-carbon, thus confirming deutero substitution at that carbon.

Mass spectroscopy (M + 1) peak at m/e = 226.

EXAMPLE 2

(a) 3'-phenoxyphenyl-2-d-2-ynyl 1-(4"-ethoxyphenyl-2,2,3,3-tetrafluoro-4,4-$d_2$-cyclobutane carboxylate

1-(4-ethoxyphenyl)-2,2,3,3-tetrafluoro-4,4-$d_2$-cyclobutane carboxylic acid (79.2mg) was refluxed with thionyl chloride (64mg) on a steam bath for 1 hour and then evaporated to dryness to yield the acid chloride as a colourless oil. This oil was dissolved in benzene (sodium dried, 1 ml) and pyridine (23mg) followed in 5 minutes by 3'-phenoxyphenyl-2-d-prop-2-yn-1-ol (60.6mg) dissolved in benzene (1 ml). The mixture was allowed to react at room temperature overnight, after which it was quenched in dilute HCl in a separating funnel. The organic layer was washed with water and dried with anhydrous sodium sulphate; it was chromatographed on a silica column eluting with petroleum ether/methylene chloride mixture to yield 70 mg of a colourless viscous oil. Nmr spectromery confirmed that this was the desired ester.

(b) For comparison purposes 3'-phenoxyphenyl-prop-2-ynyl 1-(4-ethoxyphenyl)-2,2,3,3-tetrafluoro-4,4-$d_2$-cyclobutane carboxylate was also synthesised using the above method.

EXAMPLE 3

(a) (R-)(-)3'-phenoxyphenyl-2'-d-prop-2'-ynyl 1-(4-ethoxyphenyl)-2,2,3,3-tetrafluorocyclobutane carboxylate

(R-) 1-(4"-ethoxyphenyl)-2,2,3,3-tetrafluorocyclobutane carboxylic acid (100mg) was refluxed with thionylchloride (1 ml) for 40 minutes and then evaporated to dryness to yield the acid chloride as a colourless oil. This oil was dissolved in benzene (Na dried, 2 ml) and pyridine (50 mg) in benzene (1 ml) added. After 3 minutes a solution of 3'phenoxyphenyl-2-d-prop-2-yn-1-ol (78 mg) in benzene (1 ml) was added. The mixture was stirred overnight at room temperature. Ice water and diethyl ether was added to the reaction mixture. The ether layer was separated, washed with dilute HCl, water, sodium bicarbonate solution and then dried over anhydrous magnesium sulphate. The dried extract was evaporated to dryness to yield 160 mg of a faintly yellow oil. This oil was purified and separated into the pure optical isomers using HPLC eluting with 8% ethyl acetate in petroleum spirit (40° - 60°). The first peak eluting yielded, after solvent removal, 65 mg of the desired (R-)(-) isomer.

Optical rotation $[\alpha]^{20}_{Na\ 589}$ = -38.24° in EtOH, c = 0.53%.

(b) Using the same procedure (R-)(-) 3-phenoxyphenyl prop-2-ynyl 1-(4-ethoxyphenyl)-2,2,3,3-tetrafluorocyclobutane carboxylate was prepared for purposes of comparison.

EXAMPLES 4 - 12

Using the appropriate starting materials and the general synthetic methods (A to E) described previously in this specification the following compounds were synthesised. Examples 2 and 3 are also included in this table.

TABLE 1

| EXAMPLE NUMBER | SYNTHESIS METHODS USED | STRUCTURE (A group | R' | R'' | R''' | Y) |
|---|---|---|---|---|---|---|
| 2 | B,C,A, | (e) $R^1$ = OET; $R^2$ = H<br>$Z^1$-$Z^4$ = F; $Z^5$,$Z^6$ = D | D | $-C{\equiv}CH$ | H | O |
| 3 | B,C,A, | Same but $Z^5$, $Z^6$ = H | D | $-C{\equiv}CH$ | H | O |
| 4 | D,A | Same as 3 | H | $-C{\equiv}CD$ | H | O |
| 5 | D,A | (c) $R^1$ = Cl; $R^2$ = H<br>$Z^1$ - $Z^4$ = F; $Z^5$, $Z^6$ = H | H | $-C{\equiv}CD$ | H | O |
| 6 | D,A | Same as 2 | H | $-C{\equiv}CD$ | H | O |
| 7 | B,C,A | (c) $R^1$ = $CD_3O$; $R^2$ = H<br>$Z^1$ - $Z^4$ = F; $Z^5$, $Z^6$ = H | D | $-C{\equiv}CH$ | H | O |
| 8 | B,C,A | (a) X,X' = Cl | D | $-C{\equiv}CH$ | H | O |
| 9 | B,A | Same as 3 | D | D | F | O |
| 10 | B,C,A | Same as 3 | D | $-C{\equiv}CH$ | F | O |
| 11 | B,C,A, | (d) $R^1$ = OEt; $R^2$ = H<br>X, X' = Cl; W, W' = H | D | CN | H | O |
| 12 | B,C,A, | Same as 11 but W, W' = D | D | $-C{\equiv}CH$ | H | O |

The arthropodicidal activities of the compounds were determined according to the following Examples 13 to 15.

EXAMPLE 13

Insecticidal activity was investigated against blowfly, *Lucilia cuprina*. The method used was as follows:-

(a) The compounds were tested for activity against a dieldrin susceptible strain (BLL) which had been collected before dieldrin usage in the field.

The test compound was applied in acetone solution, 0.5 µl dispensed with a Drummond micropipette to the dorsum of the thorax of 2-3 day old females. Adult flies were fed on water and sugar-only and maintained at 25°C and 60-70% RH. The mortalities were determined after 24 hours. Moribund flies were regarded as dead. The $LD_{50}$ values, in terms of concentration, were interpolated from the probit/log dose relation using a computer program.

The results given in Table 1 are expressed in terms of the Potency Index which is the ratio ($LD_{50}$ Permethrin/$LD_{50}$ Test Compound) x 100.

(b) Potentiation

The compound was also tested on the insects described above in conjunction with the potentiator

piperonyl butoxide by pretreating each insect with 1 µl of a 2% solution of the potentiator in acetone.

The mortalities were counted at 48 hours after treatment and compared with acetone and acetone/potentiator controls.

The $LD_{50}$ values were determined as described above and converted to Potency Index values.

About the same levels of potentiation were obtained when piperonyl butoxide was replaced by an equal amount of "Sesoxane".

EXAMPLE 14

Insecticidal activity against the German cockroach (*Blatella germanica*) was determined using the following method:

The compound under test was applied in acetone solution at a range of concentrations. 0.5 µl was dispensed with a Drummond micropipette to the ventral thorax of adult cockroaches. The mortalities were determined after 48 hours. Moribund cockroaches were regarded as dead. The $LD_{50}$ values in terms of concentration were determined by probit analysis of the mortality/concentration data and converted to Potency Index values.

EXAMPLE 15

Insecticidal activity against the cotton pest Heliothis punctigera was determined using the following method:

The compound under test was applied in acetone solution at a range of concentrations. 0.5 µl was dispensed with a Drummond micropipette to the dorsal surface of 3rd instar larvae. Each larva was held in a separate container and was fed on spinach and maintained at 25°C and 60-70% RH. The mortalities were determined after 48 hours. Moribund larvae were regarded as dead. The $LD_{50}$ values in terms of concentration were determined by a probit analysis of the mortality/concentration data and converted to Potency Index values.

Arthropodicidal Activities

The compounds of Examples 2 to 12 inclusive shown in Table 1 were tested by the methods of Examples 13, 14 and 15. The corresponding protonic compound i.e., where neither R' nor R'' contain deuterium was also tested and the ratio of the activity of the deuterated compound to that of the corresponding protonic compound is given in Table 2.

TABLE 2

| Compound of Example | Activity Ratio on Insect | | | |
|---|---|---|---|---|
| | Example 13 *Lucilia cuprina* | | Example 14 *Blatella germanica* | Example 15 *Heliothis Punctigera* |
| | alone | + synergist | | |
| 2 | .28 | 2.96 | 1.09 | 1.63 |
| 3 | 1.46 | 2.00 | 3.00 | 5.00 |
| 4 | 1.43 | 0.24 | 0.42 | - |
| 5 | 1.36 | 1.00 | 0.43 | 2.67 |
| 6 | 0.61 | 1.00 | 0.76 | 3.46 |
| 7 | 2.21 | 0.46 | 0.79 | 0.64 |
| 8 | 0.75 | 1.00 | 2.00 | 2.75 |
| 9 | 1.00 | 0.38 | 0.80 | 0.83 |
| 10 | 1.33 | 0.5 | 0.57 | 0.60 |
| 11 | 1.05 | 1.29 | 0.81 | 2.81 |
| 12 | 1.16 | 1.17 | - | 2.91 |

CLAIMS:

1. Compounds of the general formula (I) and their isomeric forms

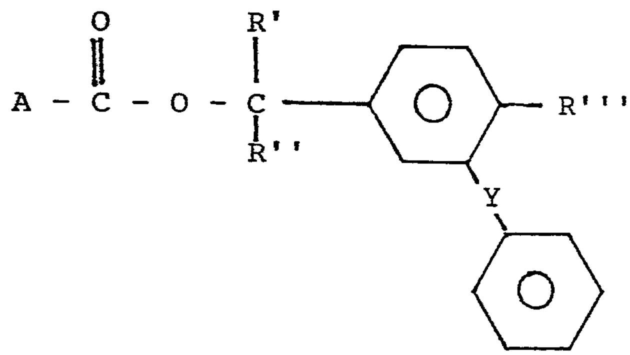

(I)

wherein A represents any group which in association with the remainder of the molecule gives arthropodicidal activity and which may contain a deuterium atom in place of any hydrogen atom which is attached to a carbon atom having four separate bonds;
Y is O, S, $CH_2$, or NH;
R' is hydrogen or deuterium, R'' is hydrogen, deuterium, -CH, -C≡CH or -C≡CD and R''' is hydrogen or fluorine; provided that the compound contains at least one deuterium atom.

2. Compounds as claimed in Claim 1, characterized in that A is one of the following structures -

(a)

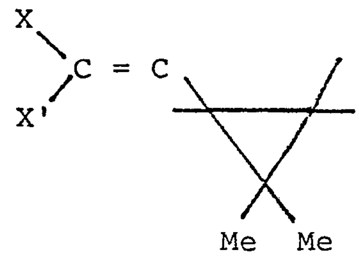

(b)

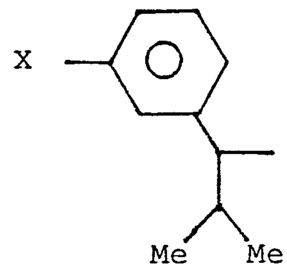

(c)

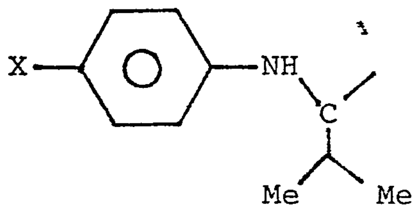

(d)

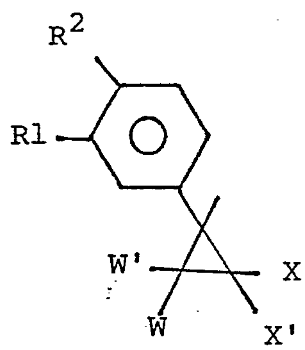

(e)

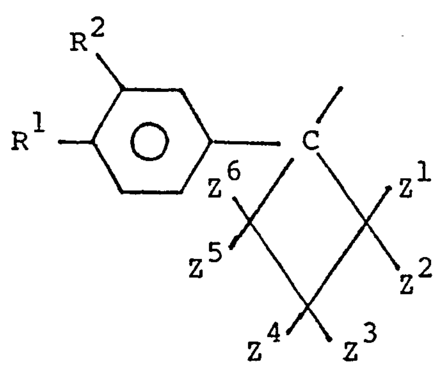

wherein

R' is a halo group; or a lower alkyl, lower alkoxy or lower alkylthio group, in each of which the alkyl group may be substituted with one or more halo groups;

$R^2$ is hydrogen or a halo or malomethyl group; or $R^1$ and $R^2$ together form a methylenedioxy, or a difluoro-methylenedioxy group or, $R^1$ and $R^2$ together with the carbon atoms to which they are attached, form an aromatic ring;

wherein any hydrogen atom in $R^1$ or $R^2$ may be replaced by deuterium;

X and X' are the same or different and are selected from chloro, fluoro, bromo, methyl or trifluoromethyl;

W and W' are the same or different and each is hydrogen or deuterium;

$Z^1$, $Z^2$, $Z^3$, $Z^4$, $Z^5$ and $Z^6$ are the same or different and are selected from fluoro, chloro, bromo, hydrogen, deuterium, $-CH_3$, $-CH_2X$, $-CHX_2$ and $-CX_3$ wherein X is as defined above.

3. An arthropodicidal compound which comprises at least one deuterium atom substituted onto a carbon atom in the structure of the compound.

4. A method for the preparation of compounds according to claims 1 or 2 characterised by the step of reacting an acid of formula ACOOG, where ACOO- is as defined in Claim 1 or Claim 2, or a reactive derivative of said acid with an alcohol of formula (II),

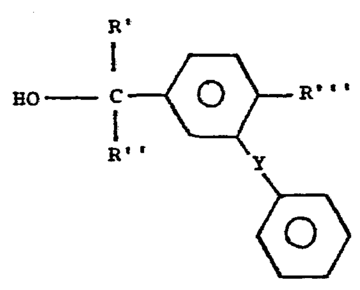

II

wherein Y and R', R'', R''' are as defined in Claim 1, or a reactive derivative of said alcohol.

5. A method of increasing the activity of an arthropodicidal compound which comprises substituting at least one deuterium atom for a hydrogen atom attached to a carbon atom in the structure of the compound.

6. An arthropodicidal composition comprising an active ingredient in admixture with a diluent or carrier characterised in that the active ingredient is a compound according to any of claims 1 to 3.

7. A composition according to claim 6 characterised in that it includes at least one substance which has a synergistic or intensifying effect on pyrethroids, preferably selected from propynyl ethers, propynyl oximes, propynyl carbamates, propynyl phosphonates, S,S,S-tributylphosphorotrithionates, [2-(2-butoxyethoxy)ethoxy]-4,5-methylenedioxy-2-propyltoluene (Piperonyl butoxide), 3-hexyl-5(3,4-methylenedioxyphenyl)-2-cyclohexanone (Piperonyl cyclonene), 2-(3,4-methylenedioxy-phenoxy)-3,6,9-trioxaundecane (Sesoxane or Sesamex), 1,2-(methylenedioxy)-4-[2-(octylsulfinyl)propyl] benzene (Sulfoxide), and dipropyl-5,6,7,8-tetrahydro-7-methylnaphtho-[2,3-d] 3-dioxole-5,6-dicarboxylate (n-Propyl isome).

8. A composition according to claim 7, characterised in that the substance is present in the composition in an amount of from 1/1000th to fifty times, preferably 1/100th to five times the weight of the compound of formula (I).

9. A composition according to any of claims 6 to 8 characterised in that another active ingredient is present.

10. A method of combating arthropods by applying an active ingredient to the arthropods or to a habitat thereof, characterised in that the active ingredient is a compound according to any of claims 1 to 3 or a composition according to any of claims 6 to 9.

11. A method of freeing or protecting domesticated animals from parasitical insects or acarids by applying an active ingredient to the said animals characterised in that the active ingredient is a compound according to any of claims 1 to 3 or a composition according to any of claims 6 to 9.

12. A compound of general formula (II)

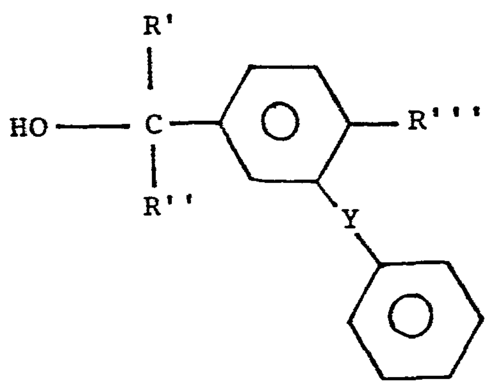

II

wherein Y and R', R'', R''' are as defined in Claim 1, or a reactive derivative of said alcohol.